# EUROPEAN PATENT APPLICATION

(11) **EP 2 903 289 A1**
(43) Date of publication of application: **05.08.2015**
(21) Application number: 14305141.5
(22) Date of filing: 31.01.2014
(51) Int. Cl.: H04N 21/2343, H04N 21/44, H04N 21/63

(54) **Receiver for layered real-time data stream and method of operating the same**

(71) Applicant: Thomson Licensing, 92130 Issy-les-Moulineaux (FR)
(72) Inventor: Drexler, Michael, 30989 Gehrden (DE); Schreiber, Ulrich, 31249 Hohenhameln (DE)
(74) Representative: Lindemann, Robert

(57) **Abstract**

A method of receiving a layered real-time data stream comprises receiving two or more layers of a single real-time layered data stream, and transferring data from each layer to respective dedicated processing data buffers selected from a pool of processing data buffers. Data from each of the layers in respective processing data buffers is concurrently processed, the processing data buffers the data of which was processed are returned to the pool of processing data buffers, and the processed data is output. In accordance with the method reception of data of a layer is rejected or reduced if a number of filled dedicated processing data buffers reserved for that layer exceeds a first predetermined value while the number of filled dedicated processing data buffers of a different layer of the same data stream is lower than a second predetermined value.

## Description

### Field of the invention

The invention relates to receiving data streams, in particular layered data streams, and corresponding control of receive buffers. The invention also relates to a receiver for data streams and a buffer arrangement for a data stream receiver.

### Background

Data of a piece of digital content can be transmitted in various ways, e.g. by transmitting a single file comprising the entire content, by transmitting multiple files which, when combined, comprise the entire content, or by transmitting a stream of data, which provides sufficient data per unit time for continuously processing the data. In this context content relates to any digital representation of data that can be processed. Processing includes but is not limited to decoding for audio-visual representation.

Streaming data can be considered the digital equivalence to just-in-time delivery in an industry that receives components for assembling them into a finished product. As with just-in-time production processes a constant inflow of digital data through the data stream is mandatory for uninterrupted processing and outputting the result of the processing. In order to ensure a sufficient amount of data is present at any time and under any variations and fluctuations of a data stream, e.g. resulting from variations or fluctuations of a network connection, a buffer is usually provided for storing an amount of data prior to processing. The amount of data stored in the buffer is calculated considering expected variations and fluctuations in the data stream. The expected variations are derived from data on past stream transmissions and measured network capacities, and may be adapted or varied over time.

Some type of digital content may be available in a layered representation. A layered data stream in the context of the invention refers to a data stream that comprises a base layer providing a minimum amount of data, which minimum amount of data is sufficient for a minimum amount of processing to produce a meaningful result, and that further comprises one or more additional layers adding additional data which, when processed concurrently with the data from the base layer, improves the result of the processing. For example a base layer of a content stream may include a coarse representation of the content, and additional layers relating to the same content may add details for enabling a finer, enhanced, or richer representation of the content.

An example for layered content is streamed video or audio content. For example, a video stream may be divided into a base layer and one or more additional layers. Data for video images may be provided at various resolutions in terms of pixels per frame or frames per second. Video images having the first resolution are provided by a first layer, or base layer, of a corresponding data stream. The first layer of the stream will typically provide sufficient data for decoding the video and reproducing it. The data from the base layer is processed into a corresponding video signal. Processing is for example a decoding process in accordance with known video coding and decoding methods including MPEG2, MPEG4, H.264, H.265, etc. If a user desires a better resolution of the video signal, for example because the user's video reproduction device offers a higher native resolution in terms of pixels or frames per second, a second layer data stream relating to the same content can be used for providing data allowing for decoding higher resolution video images. Similarly, a third layer data stream could be used for providing data for an even higher resolution version of the content. Data from the additional layers are processed concurrent with the data from the base layers and add further details to the video signal obtained by processing the base layer stream. Further details include for example higher resolution in terms of pixels per frame or a higher number of frames per second, or added data for 3D reproduction.

Another example for layered content is video with a variety of alternative or supplementary audio soundtracks. In this example video data may be transferred in a first layer data stream, and audio data may be transferred in one or more second layer data streams.

It is also conceivable to employ layered data streams for audio-only signals. For example the base layer could carry data for a monaural audio stream, and the additional layers carry data for generating a stereophonic or multi-channel audio signal.

Each data stream representing a layer is transmitted independent from the other layer's data streams, and may even be routed differently across a network. This may result in data from two or more streams for a given video image arriving at different times.

Real-time data stream in the context of the invention refers to a data stream that, when processed at the receiver, requires data from each of the layers to simultaneously be present for processing. The amount of data of each layer required for processing can vary over time and from data stream to data stream.

Obviously, streamed video images from the example above require real-time data transfer. In order to decode video images at a desired resolution that are transmitted over a layered data stream, video data from each layer must be available simultaneously for each image of the video stream. A receiver for receiving such layered video stream will typically have a number of receive buffers corresponding to the number of streams that provide the data. However, if the buffers are not filled appropriately and in accordance with the amount of data required from each stream for concurrent processing a situation may occur in which data from one stream that is required for processing does not arrive in time or does not arrive at all due to latency on the connection or congestion of the connection by the other stream, or streams.

This situation will be described hereinafter with regard to a more general case of the video stream presented before. The more general case refers to a media transmission system with several layers and corresponding streams. These layers may for example have different significance to the media data that is transmitted and will be transmitted in a scalable way with different error protection mechanisms on each individual stream. The error protection may be part of the channel coding used for each one of the streams. The number of layers and accordingly the number of streams, and likewise the amount of data transmitted in each layer can differ and depends from the type of media content.

For improved clarity the layers are hereinafter referred to as first, second, etc. layers rather than base layer and additional layers.

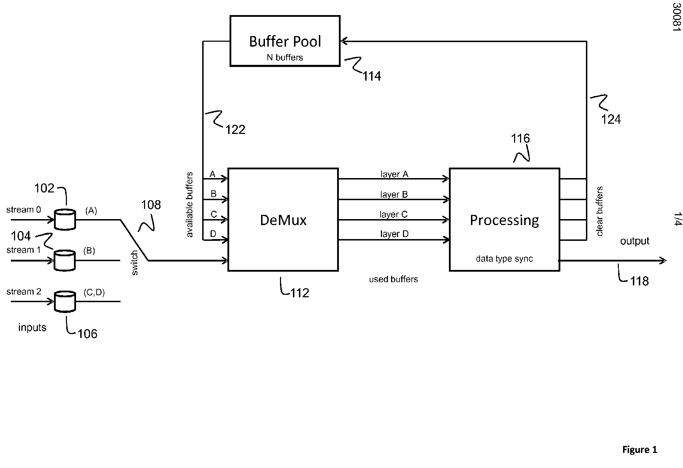

Figure 1 depicts parts of a general block diagram of a media receiver adapted to receive layered content streams. Three input streams, stream 0, stream 1 and stream 2, are buffered independently in network interface buffers 102, 104, 106. The network interface buffers are part of a network interface and cannot be controlled directly through the media receiver. The network interface buffers are typically small in respect of storage capacity and will not hold sufficient data for assembling and reproducing streamed media content. Moreover, they cannot be controlled by any downstream processing unit for stream synchronization or stream balancing. Multiplexer 108, shown as a simplified selection switch, periodically, i.e. at fixed time intervals, reads data from one of the network interface buffers, and stream data is fed to demultiplexer 112 for separating individual layers from each stream. In the exemplary block diagram stream 0 carries data for layer A, stream 1 carries data for layer B, and stream 2 carries data for layers C and D. Thus, the demultiplexer 112 effectively only needs to de-multiplex stream 2, and can simply distribute the other streams since they only carry one layer each. For maximum performance, a processing buffer pool 114 is used, allowing for keeping the amount of copy processes in the memory to a minimum and thereby increasing the system's performance.

Demultiplexer 112 needs one empty processing buffer for each layer's data. The processing buffers are arranged in processing buffer pool 114, from which buffers are made available to demultiplexer 112. Data is read from the received streams, layers are extracted, and each layer's data is directly copied to the associated processing buffer. Once processing buffers are filled, i.e. hold sufficient data for further processing, e.g. an entire video or audio frame, the content from all corresponding and filled processing buffers is provided to processing unit 116, i.e. all data from all layers required for concurrent processing of at least one media content unit. Processing unit 116 processes the data and outputs resulting data or signals at output 118. As mentioned before processing unit 116 needs data from all of the layers in a synchronized fashion for proper operation, i.e. data from all layers - in appropriate amounts - must be available for processing. Accordingly, data remains in the processing buffers until sufficient data from all layers is available for processing the next content unit. For example, once data of all layers for one video frame is present in accordingly filled buffers for each layer the processing may start, but processing will not start as long as a buffer for one layer is not filled, i.e. data from one layer is missing. After processing the data from all layers the processing buffer space that is now no longer used is cleared or indicated free and returned to processing buffer pool 114 for reuse. It is to be noted that the connections in figure 1 do not show the actual content stream data flow from the demultiplexer to the processing buffer and from the processing buffer to the processing unit. Rather, the processing unit is given pointers to the memory that actually holds the data. Thus, connection 122 from buffer pool 114 to demultiplexer 112 provides pointers to memory areas available for buffering, and the corresponding connection 124 from processing unit 116 to buffer pool 114 informs the buffer pool that the data in the memory areas referred to by corresponding pointers is no longer required, i.e. the referred memory area can be assigned anew.

This processing buffer concept may cause a problem in case of time shifted or offset input streams, for example due to different channel coding, different routing, etc. Problems may also occur for extremely different data rates amongst the input streams. The problem occurs when a processing buffer is full, i.e. cannot take any more data, while there is insufficient data for concurrent processing in one of the other buffers. In this case the processing will not start even though one buffer is full. If processing is not started the buffer will not be cleared and thus cannot accept new data. This may result in a buffer deadlock. The processing buffer pool size must be determined so as to compensate for all these situations because all processing buffers stay in use until the processing unit processed the data and cleared the processing buffers.

The processing buffer pool size is fixed for each application and must be determined before running the application, taking the maximum expected time shift and difference in data rates between the stream inputs into account. However, this is often not well known beforehand or only a very coarse estimation. Choosing the processing buffer sizes and thus the processing buffer pool size too small results in a deadlock. All buffers of the pool remain in use, waiting for the processing unit to process the data, i.e. layer synchronization. Consequently, the demultiplexer pauses working due to lack of free processing buffers. As a result layer synchronization will never happen, and the system blocks.

### Summary

The method in accordance with the present invention prevents one or more layers of a layered content stream from consuming too many processing buffers from the processing buffer pool and thus effectively prevents a processing buffer deadlock as described above. In accordance with an embodiment of the invention a control logic that implements the inventive method controls and manages distribution of data to processing buffers for each data of each single layer. As the demultiplexer needs free buffers for data from each layer in order to be able to copy the respective layer's data, the only way to influence the data distribution to the processing buffers is to control the input switch of multiplexer 108 upstream of the demultiplexer. In accordance with the invention reception of data from one or more input streams is temporarily disabled or data from one or more input streams is accepted only at a reduced frequency, i.e. less often, or for a reduced time period, or generally at a reduced rate, by accordingly controlling the multiplexer. The method according to the present invention compensates time shifts or time offsets between input streams and layers as well as different data rates amongst the various input streams.

In an embodiment of the method buffers are emptied in response to a control signal from the processing unit after a predetermined time period during which the processing had not been active even if there is not sufficient data from all streams for regular processing. In this case, either the buffers are simply cleared for allowing re-synchronization, or a reduced form of processing is started under modified processing parameters taking the lack of data from one or more layers into account. Preferably, sufficient data from a base layer is present before such action takes place. This embodiment of the method may result in reduced quality of reproduction of the media stream, but allows for making buffer space available while not fully pausing the reproduction for too long.

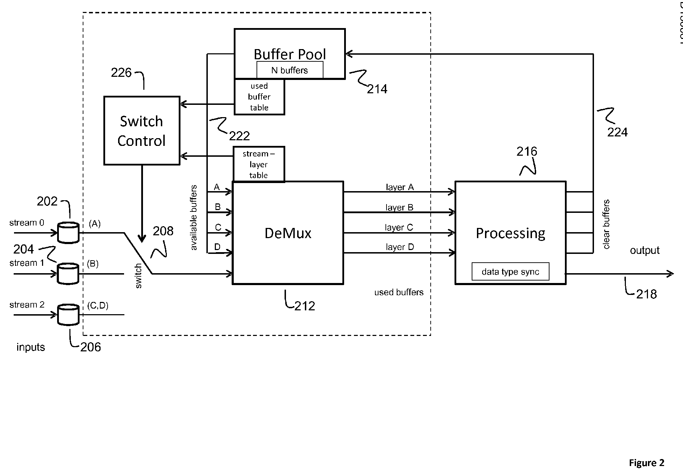

The inventive method effectively reduces the amount of data read from the network input buffers. As mentioned before the receiver does not allow for controlling the network interface buffers, or the source of data streams. Likewise, the receiver has no means of controlling the processing of the received streams. The dashed line in figure 2 illustrates the components in the receiver that can be influenced for controlling processing buffer distribution once the buffer pool size for each layer has been set. The buffer pool size for a layer may be expressed in a number of processing buffers assigned to that layer. Depending on the type and protocol of the network reducing the amount of data that is read from the network input buffers will result in a reduced transmission rate at the source of the layered stream. For example, if a network input buffer is full it will not accept further data. The network protocol may, in this case, provide for a flow control mechanism that provides a "buffer full" message to the source, which then either waits before retransmitting the data, lengthens the time periods between sending bursts of data, reduces the data rate, or uses a combination thereof. The message to the source may be as simple as suppressing the acknowledgement of receipt for a data packet. In case a return channel is not available, a full input buffer will simply not accept any new data, or will purge old data in favor of new data.

### Description of drawings

In the following section the invention will be described with reference to the drawing, in which
- Fig. 1: shows a block diagram corresponding to a part of a known receiver for layered content streams;
- Fig. 2: represents a block diagram corresponding to a part of an exemplary receiver for layered content streams in accordance with the invention;
- Fig. 3: depicts a flow diagram of a method in accordance with the invention; and
- Fig. 4: shows an exemplary block diagram of a receiver including a buffer arrangement for layered content streams in accordance with the invention.

### Detailed description

Figure 1 has been discussed further above and will therefore not be discussed any further.

Figure 2 represents a block diagram of a part of an exemplary receiver for layered content streams in accordance with the invention. The receiver shares some elements with the one discussed with reference to figure 1. Similar to the known receiver three input streams, stream 0, stream 1 and stream 2, are buffered independently in network interface buffers 202, 204, 206. Like in the block diagram of figure 1 the network interface buffers are part of a network interface and cannot be controlled directly through the media receiver. Multiplexer 208 periodically, i.e. at predetermined or fixed time intervals, reads from one of the network interface buffers, and stream data is fed to demultiplexer 212 to separate individual layers from each stream.

When starting the method, i.e. when starting reception of the layered content stream, all input streams are switched through to demultiplexer 212 with equal rights. First data arrives at the demultiplexer and the data is copied to the appropriate processing buffers as assigned from processing buffer pool 214. Available buffers are indicated by corresponding pointers via connection 222. At the same time a "stream-layer table" is setup, indicating which layer is arriving in which stream. Like in figure 1 stream 0 carries data for layer A, stream 1 carries data for layer B, and stream 2 carries data for layers C and D.

The buffer pool fills a "used buffer table" on a layer by layer basis. Both tables are used by switch controller 226 for reducing or switching off reading an input stream when the processing buffers of the corresponding layer consume too much memory in the buffer pool. In this case, the network buffers of the input stage compensate for the reduced reading.

When sufficient data is present for beginning processing by processing unit 216, i.e. when layer synchronization is achieved, processing unit 216 starts processing. Processing unit 216 uses pointers to access the data in the processing buffers. Once the data is processed and is no longer needed the corresponding processing buffers are returned to the processing buffer pool. The "used buffer table" is updated and switch controller 226 returns to normal input stream reading, i.e. reading the input streams at equal rate, if the buffer usage is balanced. Otherwise, the switch controller keeps preferring streams or switching off streams until the processing buffer usage is substantially balanced. The network buffers of the input stage compensate for minor time shift at this point. The system dynamically and automatically adjusts processing buffer use during normal operation.

In an exemplary embodiment switch controller 226 may handle input stream reading in a multi-level way, e.g. if one of the four layers consume more than half of all buffers from the pool, reading of the corresponding input stream will be reduced by a factor of 2.

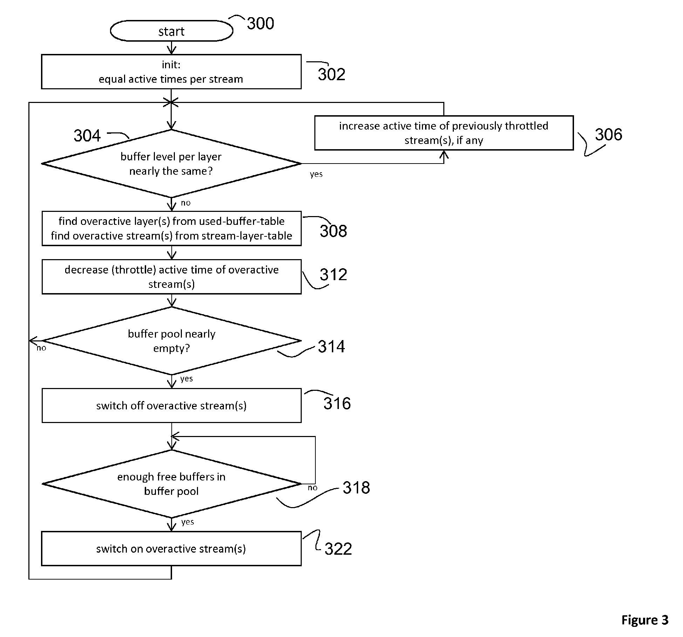

In another embodiment, when all or nearly all buffers from processing buffer pool 214 are consumed, receiving data from the layer consuming most of the buffers is temporarily disabled by correspondingly controlling multiplexer 208 (not shown in figure 3).

The circuit shown in the block diagram as well as any actual implementation thereof is independent from the kind of processing buffer pool implementation, i.e. if there is only one common buffer pool for all layers or one buffer pool for each layer.

Figure 3 shows a flow diagram of an exemplary embodiment of the buffer control in the receiver. After the method is started in step 300 the receiver is initialized, step 302, to read data from each stream during equal time periods. Then the method continuously or repeatedly, in appropriate time intervals, checks, step 304, if the number of filled processing buffers of all layers track each other within a predetermined tolerance window and in a predetermined ratio, e.g. are substantially equal, or balanced.

In the negative case, "no"-branch of step 304, overactive layers, i.e. layers currently consuming too many processing buffers in relation to the other layers, are identified using a used-buffer table. Likewise overactive streams, i.e. streams currently providing too much data with respect to the allocated balanced processing buffer space, are identified using the used-buffer table. Once the overactive streams and layers are identified, step 308, the active time during which data is read from the identified overactive stream is reduced, step 312. In other words, the streams or layers are throttled. The reduction is effected by accordingly controlling the input multiplexer (208 in figure 2, not shown in figure 3). In step 314 the method checks if the number of remaining processing buffers in the processing buffer pool is below a predetermined threshold, i.e. the pool is close to running out of buffers. If not, "no"-branch of step 314, the method returns to step 304, checking if the number of filled processing buffers of all layers track each other in the predetermined ratio.

If the processing buffer pool is about to be fully used, "yes"-branch of step 314, overactive streams are switched off, step 316. This effectively stops receiving data from any stream that was switched off, e.g. by accordingly controlling the input multiplexer (208 in figure 2, not shown in figure 3), and allows for receiving data from other streams so that eventually sufficient data from all streams is available for simultaneous processing. Once reception of data from the overactive streams is stopped the method checks, in step 318, if the processing buffer pool has sufficient free buffer space for resuming reception of data on previously switched off streams or even normal operation. Only when the processing buffer pool has free buffer space the method returns to step 304, "yes"-branch of step 318, and starts over.

If the checking in step 304, determines that the number of used processing buffers of all layers track each other within a predetermined tolerance window and in a predetermined ratio, e.g. are substantially equal, or balanced, "yes"-branch of step 304, the active time of any stream that was previously throttled is increased. If no stream is throttled the checking is repeated without taking any action.

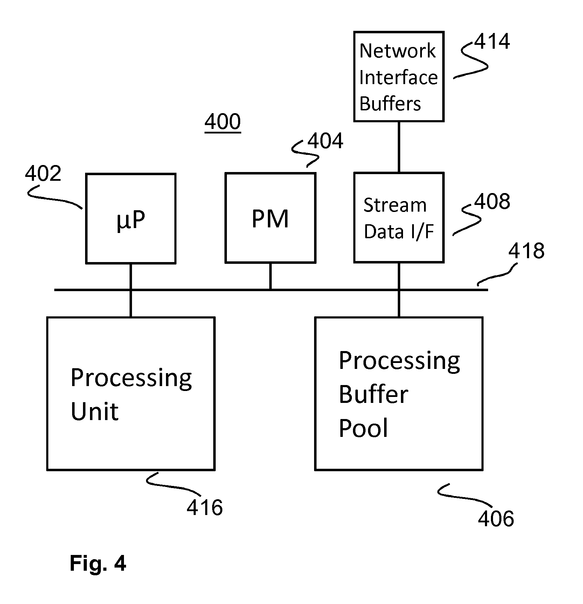

Figure 4 shows an exemplary block diagram of a receiver 400 for a layered content stream in accordance with the present invention. Microprocessor 402 is linked to program memory 404, processing buffer pool 406 and stream data interface 408 and processing unit 416 via data bus 418. Data bus 418 is not necessarily a single data bus but may also be implemented as a system of parallel buses each connecting all or only some components of the receiver, as appropriate and required for data flow. Network interface buffer 414 is connected with the stream data interface 408 and cannot be accessed or controlled by microprocessor 402 or processing unit 416. Stream data interface 408 includes one or more physical data interfaces. In an embodiment, each one of a plurality of physical data interfaces receives one stream forming part of the layered content stream. In another embodiment a single physical data interface receives multiple streams forming part of the layered content stream over a respective multiplicity of virtual data connections. The microprocessor is of a commonly known and used type and may be constructed in accordance with any suitable one of the known architectures, e.g. x86, x86-64, ARM, MIPS, etc. Processing unit 416 is implemented as corresponding software running on a general purpose processor similar to microprocessor 402, or even running on microprocessor 402, or can be a processor having a hardware structure specifically designed for a particular processing purpose. Such processor can also be implemented on a programmable logic, such as an FPGA. Program memory 404 and processing buffer pool 406 are implemented as random access memory (RAM) and hold, inter alia, software instructions, pointers to buffer space and data at run time. The program memory and the buffer pool may, in addition, also include non-volatile memory. The non-volatile memory may be implemented through hard disk drives (HDD), Flash-Memory, or a combination thereof. Other non-volatile memory types such as MRAM, optical storage, etc.

The invention has been described herein before using exemplary embodiments. It is readily apparent that different embodiments may be combined without departing from the spirit of the invention.

As will be appreciated by one skilled in the art, aspects of the present invention can be embodied as a system, method or computer readable medium. Accordingly, aspects of the present invention can take the form of an embodiment entirely implemented in hardware, an embodiment entirely implemented in software, including firmware, resident software, micro-code, and so forth, or an embodiment combining software and hardware aspects that can all generally be referred to herein as a "circuit," "module", or "system." Furthermore, aspects of the present invention can take the form of a computer readable storage medium, for example storing software instructions that, when executed in a receiver for layered real-time streams, enable the receiver to execute the method. Any combination of one or more computer readable storage medium(s) may be utilized.

In this context a computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium includes, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

It will be appreciated by those skilled in the art that the block diagrams presented herein represent conceptual views of illustrative system components and/or circuitry embodying the principles of the invention. Similarly, it will be appreciated that any flow charts and the like represent various processes which may be substantially represented in computer readable storage media and so executed by a computer or processor, whether or not such computer or processor is explicitly shown.

## Claims

1. A method of receiving a layered real-time data stream, comprising:
- receiving two or more layers of a single real-time layered data stream;
- transferring data from each layer to respective dedicated processing data buffers selected from a pool of processing data buffers;
- concurrently processing data from each of the layers in respective processing data buffers, returning the processing data buffers the data of which was processed to the pool of processing data buffers, and outputting the processed data;
wherein the method further includes:
- rejecting or reducing reception of data of a layer if a number of filled dedicated processing data buffers reserved for that layer exceeds a first predetermined value while the number of filled dedicated processing data buffers of a different layer of the same data stream is lower than a second predetermined value.

2. The method of claim 1, wherein transferring data from each layer to respective dedicated processing data buffers includes controlling a data multiplexer having an input and a number of outputs corresponding to the number of processing data buffers.

3. The method of claim 1, wherein rejecting reception of data of a layer is limited to a predetermined time before the data already present in the processing data buffers holding data from other layers is processed.

4. The method of claim 3, wherein the type of processing or at least one processing parameter is changed to reflect the lack of data from a layer for concurrent processing.

5. The method of claim 1, wherein one or more layers are multiplexed in a single data stream, including de-multiplexing the layers of one data stream before transferring data from the layers to corresponding dedicated processing data buffers.

6. The method of claim 1, including receiving each stream over an individual data connection, and providing data from each data connection to a dedicated network interface buffer.

7. The method of claim 6, wherein rejecting reception of data of a layer includes rejecting reception of data of a stream that carries the data of said layer.

8. The method of claim 7, wherein rejecting the reception of data of a stream includes using flow control mechanisms prevent the transmission of data at a transmitter or to reduce the amount of data transmitted by a transmitter.

9. A method of controlling buffers in a receiver that are arranged in a pool of buffers including:
- identifying if a received data stream is part of a layered data stream; and
- receiving two or more layers of a single real-time layered data stream;
- transferring data from each layer to respective dedicated processing data buffers selected from a pool of processing data buffers;
- concurrently processing data from each of the layers in respective dedicated processing data buffers, returning the processing data buffers the data of which was processed to the pool of processing data buffers, and outputting the processed data;
wherein the method further includes:
- rejecting or reducing reception of data of a layer if a number of filled dedicated processing data buffers reserved for that layer exceeds a first predetermined value while the number of filled dedicated processing data buffers of a different layer of the same data stream is lower than a second predetermined value.

10. A receiver for a layered real-time data stream including a microprocessor, a program memory, a data memory, a data interface, and a processing data buffer memory, wherein the program memory stores instructions which, when executed, cause the receiver to
- receive two or more layers of a single real-time layered data stream;
- transfer data from each layer to respective dedicated processing data buffers selected from a pool of processing data buffers;
- concurrently process data from each of the layers in respective dedicated processing data buffers, return the processing data buffers the data of which was processed to the pool of processing data buffers, and output the processed data; and
- reject or reduce reception of data of a layer if a number of filled dedicated processing data buffers reserved for that layer exceeds a first predetermined value while the number of filled dedicated processing data buffers of a different layer of the same data stream is lower than a second predetermined value.

11. The receiver of claim 7, wherein the memory further stores instructions to receive and decode a compressed video or audio signal.
